# EUROPÄISCHE PATENTANMELDUNG

(11) **EP 1 103 789 A1**
(43) Veröffentlichungstag der Anmeldung: **30.05.2001**
(21) Anmeldenummer: 00250387.8
(22) Anmeldetag: 17.11.2000
(51) Int. Cl.: G01C 21/32, G09B 29/10

(54) **Verfahren zum Erstellen eines Speicherformats für digitale Karten sowie Verfahren und Vorrichtung zur Erstellung oder Darstellung von Verkehrs- oder Navigationsinformationen**

(30) Priorität: 24.11.1999 DE 19957469
(71) Anmelder: MANNESMANN Aktiengesellschaft, 40213 Düsseldorf (DE)
(72) Erfinder: Michael, Oliver, Dipl.-Geograph, 40476 Düsseldorf (DE); Hort, Christian, Dipl-Ing., 40589 Düsseldorf (DE); Noy, Stephan, 50939 Köln (DE)
(74) Vertreter: Meissner, Peter E., Dipl.-Ing.

(57) **Zusammenfassung**

Ein effizientes Hochladen einer umfangreichen eine digitale Karte eines Straßenverkehrsnetzes repräsentierenden Datei in einen schnellen, aber kleinen Speicher wird ermöglicht durch eine digitale Karte zum Erstellen von auf ihr basierenden Verkehrsinformationen, Verkehrsprognosen oder Navigationsinformationen, welche Straßenabschnitte repräsentierende Segmente und/oder zwischen Segmenten liegende, in bestimmten Abständen und/oder an Kreuzungen und/oder an Abzweigungen definierte Knoten enthält, wobei die digitale Karte aus Zusammenhangsbereichen zusammengesetzt ist, wobei in einem Zusammenhangsbereich jeweils nur Segmente und/oder Knoten enthalten sind, welche alle über ebenfalls in diesem Zusammenhangsbereich enthaltene Segmente oder Knoten miteinander verbunden sind, wobei in einem Zusammenhangsbereich jeweils nur eine unter einem vorgegebenen Maximum liegende Anzahl von Segmenten und/oder Knoten enthalten ist.

## Beschreibung

Die Erfindung betrifft ein Verfahren zum Erstellen eines Speicherformats für digitalen Karten aus einer Digitalen Kartendatenbank im Hinblick auf die Optimierung von Kartendatenzugriffen, sowie Verfahren und Vorrichtung zur Erstellung oder Darstellung von Verkehrsinfor-mationen, Verkehrsprognosen oder Navigationsinformationen. In der Verkehrstelematik ist zur Erstellung von Verkehrsinformationen, Verkehrsprognosen, Navigationsinformationen etc. für Fahrzeuge ebenso wie zur fahrzeugseitigen Auswertung grundsätzlich eine digitale Karte erforderlich, bezüglich welcher die Verkehrsinformationen, Prognoseinformationen oder Navigationsinformationen bezüglich betroffener Straßen eines Straßenverkehrsnetzes bei der Übertragung referenziert werden. Digitale Karten sind in der Regel in einer Verkehrsinformationszentrale und/oder einem benutzerseitigen Endgerät zur Darstellung der Informationen in dem Fachmann bekannten Verkehrszentralen und Endgeräten in einer Form abgelegt, welche die Daten eines größeren geographischen Bereiches wie eines Landes derart in mehrere Teile unterteilt, daß jeweils geographisch zusammenhängende Gebiete (wie auch bei Papier-Karten üblich) zusammenhängend abgespeichert werden. Bei Bedarf werden diese jeweils einzeln aus einem langsamen, aber umfangreichen Massenspeicher in einen schneller zugreifbaren aber hinsichtlich des Umfangs begrenzten Speicher (RAM etc.) geladen. Wenn beispielsweise ein Fahrzeug durch ein geographisches Gebiet fährt, welches mehrere separat gespeicherte und ladbare Teile einer digitalen Karte betrifft, müssen diese Teile jeweils nacheinander einzeln hochgeladen werden, um Navigationsinformationen für das Fahrzeug zu erstellen.

Aufgabe der vorliegenden Erfindung ist die Ermöglichung eines möglichst effizienten Zugriffs auf separat abgespeicherte Teile einer digitalen Karte eines Straßenverkehrsnetzes zur Erstellung von auf dieser digitalen Karte beruhenden Verkehrsinformationen, Verkehrsprognosen, Navigationsinformationen etc. Die Aufgabe wird durch die Gegenstände der unabhängigen Ansprüche gelöst.

Die Erfindung basiert im wesentlichen darauf, daß nicht wie bisher bei Papierkarten und auch digitalen Karten üblich eine digitale Karte eines größeren geographischen Bereiches wie eines Landes in mehrere nur geographisch abgegrenzte Teile unterteilt wird, sondern eine digitale Karte aus mehreren Teilen in Form von konnotativen Zusammenhangsbereichen erstellt bzw. verwendet wird, wobei die Zusammenhangsbereiche sich aus den Zusammenhängen von (Abschnitte von Straßen oder Fahrbahnen repräsentierenden) Segmenten und/oder zwischen Segmenten liegenden (in Abständen und/oder an Kreuzungen und/oder Abzweigungen definierten) Knoten ergeben. Damit wird berücksichtigt, daß sich Fahrzeuge durch ein Straßenverkehrsnetz entlang in der digitalen Karte enthaltener Segmente und Knoten weiterbewegen, welche miteinander verbunden sind. Verglichen mit einer digitalen Karte, welche aus geographisch abgegrenzten Teilen (wie bei Papierkarten) besteht, ist deshalb z.B. beim Erstellen von Navigationsinformationen für ein Fahrzeug entlang seiner Fahrtroute ein selteneres Heraufladen von Teilen (bzw. Zusammenhangsbereichen) aus einem Massenspeicher in einen schneller zugreifbaren Speicher (RAM) erforderlich. Mit dem Begriff "digitale Karte" soll neben den Daten der digitalen Karte insbesondere auch das Format der digitalen Karte bezeichnet werden (im Sinne von"digitalem Kartenformat").

Zweckmäßig wird eine derart digitale Karte erstellt, indem ausgehend von einem willkürlich gewählten Anfangsknoten mit diesem verbundene Segmente als zu einem Zusammenhangsbereich gehörig (also in einer diesem Zusammenhangsbereich zugeordneten Teildatei) abgespeichert werden, hierauf mit diesen Segmenten über an ihnen anliegende Knoten verbundene weitere Segmente ebenfalls in diesem Zusammenhangsbereich abgespeichert werden, soweit sie nicht bereits in einem Zusammenhangsbereich abgespeichert sind usw., bis eine Maximalzahl von Segmenten (bzw. Knoten) für einen Zusammenhangsbereich erreicht wird. Hierauf wird eine Teildatei für den nächsten Zusammenhangsbereich erstellt, welcher beispielsweise an einem Anfangsknoten beginnen kann, welcher im Zusammenhang mit einem vorherigen Zusammenhangsbereich bearbeitet wurde, zu welchem aber noch nicht alle an ihm anliegenden Segmente in Zusammenhangsbereiche gespeichert wurden.

Weitere Merkmale und Vorteile ergeben sich aus den Ansprüchen und der nachfolgenden Beschreibung eines Ausführungsbeispiels an Hand der Zeichnung. Dabei zeigt als einzige Figur:

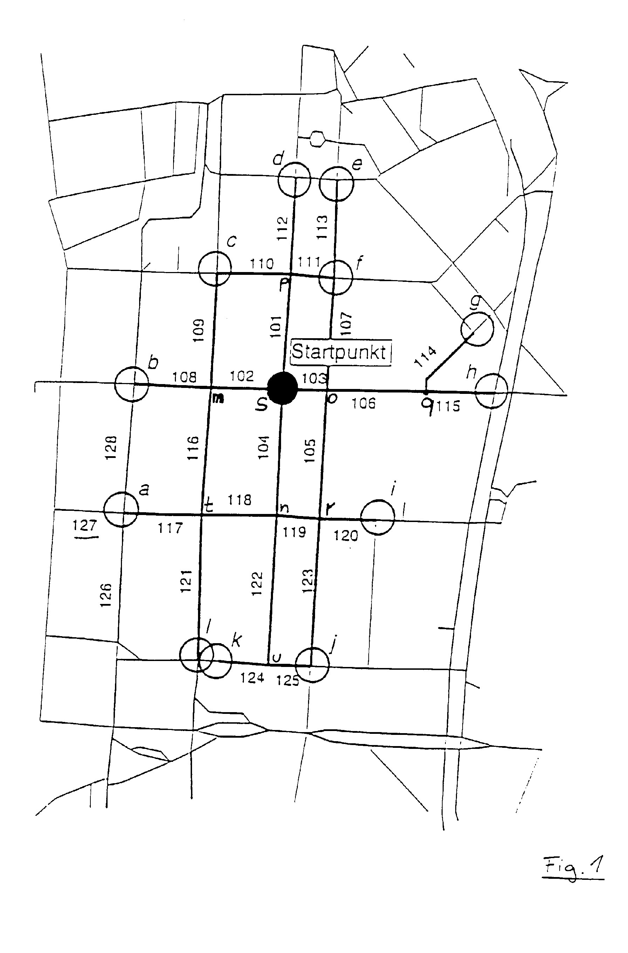

- Figur 1: einen Ausschnitt aus einem Straßenverkehrsnetz, zu welchem eine digitale Karte erfindungsgemäß erstellt werden soll.

Figur 1 zeigt einen Ausschnitt eines Straßenverkehrsnetzes, zu welchem erfindungsgemäß eine digitale Karte mit Zusammenhangsbereichen erstellt werden soll. In Figur 1 sind beispielhaft einige Segmente 101 -128, welche jeweils Abschnitte von Straßen oder Fahrbahnen oder Fahrbahngruppen repräsentieren, sowie an den Enden jeweils mindestens eines Segmentes anliegende Knoten a - u dargestellt.

Die digitale Karte eines Straßenverkehrsnetzes eines größeren geographischen Bereichs wie eines Landes ist, um aus einem Massenspeicher (CD-Rom etc.) in einen schneller zugreifbaren aber kleineren Speicher (RAM) hochgeladen werden zu können in mehrere Teile bzw. Zusammenhangsbereiche unterteilt, welche einzeln hochgeladen werden. Bisher war dem Fachmann eine Unterteilung (wie bei Papier-Karten) nach geographischen Bereichen bekannt. Erfindungsgemäß wird eine Unterteilung einer einen großen geographischen Bereich eines Straßenverkehrsnetzes betreffenden als Datei gespeicherten digitalen Karte in mehrere Teile durchgeführt durch Unterteilung in Zusammenhangsbereiche, wobei die in einen Zusammenhangsbereich aufgenommenen Segmente (oder Knoten) miteinander über jeweils ebenfalls im Zusammenhangsbereich liegende Knoten und/oder Segmente verbunden sind, um zu berücksichtigen, daß Fahrwege in der Regel über zusammenhängende Knoten und/oder Segmente verlaufen. Derart wird die Zahl der Hochladevorgänge von Teilen in Form von Zusammenhangsbereichen in einem schnelleren Speicher vermindert und es kann eine schnellere und effizientere Erstellung von Navigationsinformationen etc. für Endgeräte in Fahrzeugen erstellt werden.

Die Erstellung eines ersten Zusammenhangsbereiches erfolgt mit der Wahl eines beliebigen Start-Knotens s am Startpunkt in Figur 1. Der Startknoten sollte nicht am Rande sondern eher mitten in der digitalen Karte liegen. Ausgehend von diesem Startpunkt s werden die mit ihm verbundenen Segmente 101-104 festgestellt. Dies ist dadurch möglich, daß in digitalen Karten in der Regel das Verkehrsnetz derart repräsentiert ist, daß zu Segmenten jeweils angegeben ist, mit welchen Segmenten sie über welche Knoten weiter verbunden sind. Die mit dem Startpunkt s verbundenen Segmente 101-104 werden in einer Teil-Datei in einem Speicher (beispielsweise einem eigenen Speicher für jede Teil-Datei) zu einem Zusammenhangsbereich abgespeichert.

Zu den abgespeicherten Segmenten 101-104 werden die jeweils mit ihnen verbundenen Knoten m, n, o, p (aus der vorhandenen digitalen Karte des gesamten Verkehrsnetzes) festgestellt und in eine Bearbeitungsqueue (= Bearbeitungsschlange = First-In, First-Out = Bearbeitungstaskliste) abgespeichert. Hierauf werden die in der Bearbeitungsqueue gespeicherten Knoten (m-p) in der Reihenfolge ihrer Abspeicherung jeweils analog wie vorher der Startknoten betrachtet; es wird also jeweils zum nächsten zu betrachtenden Knoten festgestellt, welche Segmente mit ihm verbunden sind (zum Knoten m die Segmente 102, 108, 109, 116; zum Knoten n die Segmente 104, 118, 119, 122; zum Knoten o die Segmente 103, 105, 106, 107; zum Knoten p die Segmente 101, 110, 111, 112) und die mit den Knoten verbundenen weiteren Segmente werden unter bestimmten Bedingungen abgespeichert. Eine Bedingung für die Abspeicherung dieser weiteren Knoten in der Datei für den betrachteten Zusammenhangsbereich kann insbesondere sein, daß diese Segmente noch nicht in einem Zusammenhangsbereich abgespeichert wurden (weder im aktuell betrachteten noch in einem anderen Zusammenhangsbereich). Hierauf wird mit den weiteren an den nun betrachteten Segmenten anliegenden Knoten ebenso fortgefahren, wie mit den vorher betrachteten Knoten m, n, o, p. Derart wird fortgefahren, bis die Zahl der zu einem Zusammenhangsbereich in der Zusammenhangsbereichs-Datei abgespeicherten Segmente (bzw. analog Knoten) ein vorgegebenes Maximum erreicht oder überschritten hat, um die Anzahl der Segmente in einem Zusammenhangsbereich zu begrenzen. Wenn ein vorgegebenes Maximum von für einen Zusammenhangsbereich in seiner Zusammenhangsbereichs-Datei zu speichernden Segmenten erreicht ist, wird der nächste Zusammhangsbereich (bzw. die nächste Zusammenhangsbereichs-Datei) erstellt. Hierfür wird für diesen neuen Zusammenhangsbereich ein Startknoten gesucht. Dieser wird hier automatisch dort gesucht, wo ein im Zusammenhang mit einem vorher betrachteten Zusammenhangsbereich untersuchter Knoten mindestens ein Segment aufweist, welches noch nicht in einer vorher betrachteten und erstellten Zusammenhangsbereichs-Datei abgespeichert wird. Von diesem Zusammenhangsknoten und mit ihm verbundenen Segmenten ausgehend wird dann wie oben beschrieben die nächste Zusammenhangsbereichs-Datei erstellt. Die Knoten, welche jeweils als Startknoten einer Zusammenhangsbereichs-Datei in Frage kommen, ergeben sich insbesondere aus der gespeicherten Bearbeitungsqueue von Knoten. Die Reihenfolge der Knoten-Betrachtung innerhalb der Erstellung einer Zusammenhangsbereichs-Datei kann insbesondere in der Reihenfolge ihrer Ablage in der Bearbeitungsqueue (FIFO) erfolgen.

Zusammenhangsbereiche, welche nur relativ wenige Segmente (oder alternativ wenige Knoten) enthalten, können einem vorherig erstellten Zusammenhangsbereich (mit einer über einem Minimum liegenden Anzahl von Segmenten bzw. Knoten) zugeordnet, also in diesen integriert werden. Falls ein Zusammenhangsbereich dadurch zu groß wird, kann er dann beispielsweise halbiert oder weiter unterteilt werden. Derart wird eine näherungsweise homogene Größe der Zusammenhangsbereiche erzielt.

Das Verfahren kann in unterschiedlichen Details ausgestaltet werden. Zweckmäßig ist es insbesondere, wenn bei der Erstellung einer Zusammenhangsbereichs-Datei für einen Zusammenhangsbereich die Segmente in der Reihenfolge abgearbeitet werden, die absteigend der Reihenfolge ihrer Straßenklassen (absteigend von Autobahn über Landstraße bis zur weiteren Straße oder mit anderer Unterteilung) entspricht. Hierdurch werden Zusammenhangsbereiche bevorzugt entlang Straßen höherer Straßenklasse (insbesondere Autobahn) erstellt, was den Vorteil hat, daß bei der Erstellung von Verkehrsinformationen, Prognosen oder Navigationsinformationen mit einer erfindungsgemäßen digitalen Karte aus Zusammenhangsbereichen ein noch selteneres Hochladen eines Zusammenhangsbereiches erforderlich ist.

Zweckmäßig wird jeder Gesamtzusammenhangsbereich einer digitalen Karte bearbeitet, so daß auch Inseln oder Enklaven der in der digitalen Karte abgebildeten Gebietseinheit, die nicht mit dem Straßenverkehrsnetz in Verbindung stehen, bearbeitet werden.

Eine Realisierung des erfindungsgemäßen Verfahrens, der erfindungsgemäßen digitalen Karte sowie eines erfindungsgemäßen Verfahrens zur Erstellung von Verkehrsinformationen, Prognosen, Navigationsinformationen etc. mit einer erfindungsgemäßen digitalen Karte ist grundsätzlich mit einer elektronischen Schaltung oder einem Programm vorstellbar; die Erfindung ist jedoch weder ausschließlich im Kern durch ein Programm als solches definiert noch darauf beschränkt.

## Patentansprüche

1. Verfahren zum Erstellen eines Speicherformats für digitalen Karten aus einer Digitalen Kartendatenbank im Hinblick auf die Optimierung von Kartendatenzugriffen, wobei die digitale Karte Straßenabschnitte repräsentierende Segmente (101-128) und/oder zwischen Straßenabschnitten liegende, in bestimmten Abständen und/oder an Kreuzungen und/oder an Abzweigungen definierte Knoten (a-s) enthält,
zur Ermöglichung einer auf ihr basierenden Verkehrsinformation oder Verkehrsprognose oder Navigationsinformation,
wobei die digitale Karte aus Zusammenhangsbereichen zusammengesetzt ist,
wobei in einen Zusammenhangsbereich jeweils nur Segmente und/oder Knoten aufgenommen werden, welche alle über ebenfalls in diesem Zusammenhangsbereich enthaltene Segmente oder Knoten miteinander verbunden sind,
wobei in einen Zusammenhangsbereich jeweils nur eine unter einem vorgegebenen Maximum liegende Anzahl von Segmenten und/oder Knoten aufgenommen wird.

2. Verfahren nach Anspruch 1,
dadurch gekennzeichnet,
daß in einem Zusammenhangsbereich mit einer unter einem Minimum liegenden Anzahl von Segmenten und/oder Knoten liegende Segmente und/oder Knoten in einen anderen Zusammenhangsbereich integriert werden.

3. Verfahren nach Anspruch 1,
dadurch gekennzeichnet,
daß bei der Erstellung eines Zusammenhangsbereichs der digitalen Karte ausgehend von einem gewählten Start-Knoten (s) mit diesem verbundene, noch nicht in einem Zusammenhangsbereich enthaltene Segmente (101-104) in den Zusammenhangsbereich aufgenommen werden und mit Segmenten im Zusammenhangsbereich über mindestens einen Knoten und/oder Segmente verbundene weitere Segmente (106-128) in den Zusammenhangsbereich aufgenommen werden, bis das vorgegebene Maximum von Segmenten und/oder Knoten für den Zusammenhangsbereich erreicht ist.

4. Verfahren nach einem der vorhergehenden Ansprüche,
dadurch gekennzeichnet,
daß die Aufnahme von mit mindestens einem Knoten eines Zusammenhangsbereiches verbundenen Segmenten in den Zusammenhangsbereich in mit der Straßenklasse der Segmente absteigender Reihenfolge erfolgt.

5. Verfahren nach einem der vorhergehenden Ansprüche,
dadurch gekennzeichnet,
daß jeder Zusammenhangsbereich, insbesondere einschließlich nicht mit dem Straßennetz in Verbindung stehender insularer Zusammenhangsbereiche, berücksichtigt wird.

6. Digitale Karte zum Erstellen von auf ihr basierenden Verkehrsinformationen, Verkehrsprognosen oder Navigationsinformationen,
welche Straßenabschnitte repräsentierende Segmente und/oder zwischen Straßenabschnitten liegende, in bestimmten Abständen und/oder an Kreuzungen und/oder an Abzweigungen definierte Knoten
wobei die digitale Karte aus Zusammenhangsbereichen zusammengesetzt ist,
wobei in einem Zusammenhangsbereich jeweils nur Segmente und/oder Knoten enthalten sind, welche alle über ebenfalls in diesem Zusammenhangsbereich enthaltene Segmente oder Knoten miteinander verbunden sind,
wobei in einem Zusammenhangsbereich jeweils nur eine unter einem vorgegebenen Maximum liegende Anzahl von Segmenten und/oder Knoten enthalten ist.

7. Digitale Karte nach Anspruch 6,
dadurch gekennzeichnet,
daß sie nur Zusammenhangsbereiche mit einer über einem Minimum liegenden Anzahl von Segmenten und/oder Knoten enthält.

8. Digitale Karte nach Anspruch 6 oder 7,
dadurch gekennzeichnet,
daß bei der Erstellung eines Zusammenhangsbereichs der digitalen Karte ausgehend von einem gewählten Start-Knoten (s) mit diesem verbundene, noch nicht in einem Zusammenhangsbereich enthaltene Segmente (101-104) in den Zusammenhangsbereich aufgenommen wurden und mit Segmenten im Zusammenhangsbereich über mindestens einen Knoten und/oder Segmente verbundene weitere Segmente (106-128) in den Zusammenhangsbereich aufgenommen wurden, bis das vorgegebene Maximum von Segmenten und/oder Knoten für den Zusammenhangsbereich erreicht wurde.

9. Digitale Karte nach einem der Ansprüche 6 bis 8,
dadurch gekennzeichnet,
daß die Aufnahme von mit mindestens einem Knoten eines Zusammenhangsbereiches verbundenen Segmenten in den Zusammenhangsbereich in mit der Straßenklasse der Segmente absteigender Reihenfolge erfolgte.

10. Verfahren zur Erstellung oder Darstellung von Verkehrsinformationen, Verkehrsprognosen oder Navigationsinformationen betreffend ein Straßenverkehrsnetz,
dadurch gekennzeichnet,
daß es eine digitale Karte nach einem der Ansprüche 6 bis 9 verwendet.

11. Vorrichtung zur Erstellung oder Darstellung von Verkehrsinformationen, Verkehrsprognosen oder Navigationsinformationen mit einem schnell zugreifbaren Speicher (RAM), in welchem aus einem Massenspeicher ein oder mehrere Dateien betreffend jeweils einen Zusammenhangsbereich einer digitalen Karte nach einem der Ansprüche 6 bis 9 heraufladbar sind.

12. Vorrichtung nach Anspruch 11,
dadurch gekennzeichnet,
daß sie eine Zentrale zur Erstellung von Verkehrsinformationen oder Verkehrsprognosen oder Navigationsinformationen ist, mit einer Einrichtung oder einem Zugang zu einer Einrichtung zum Senden der Verkehrsinformationen oder Verkehrsprognosen oder Navigationsinformationen.

13. Vorrichtung nach Anspruch 12,
dadurch gekennzeichnet,
daß sie ein Endgerät ist zum Darstellen von von einer Verkehrszentrale per Funk empfangenen Verkehrsinformation oder Verkehrsprognosen oder Navigationsinformationen und mit einer Darstellungseinrichtung zum Darstellen von auf empfangenen Verkehrsinformationen oder Verkehrsprognosen oder Navigationsinformationen beruhenden Informationen und mit einem Speicher mit einer digitalen Karte.
